# EUROPEAN PATENT APPLICATION

(11) **EP 3 086 534 A1**
(43) Date of publication of application: **26.10.2016**
(21) Application number: 15461527.2
(22) Date of filing: 20.04.2015
(51) Int. Cl.: H04M 1/02, G06F 3/0362

(54) **AN INTERCOM DEVICE**

(71) Applicant: Fibar Group Sp. z o.o., 60-421 Poznan (PL)
(72) Inventor: Fiedler, Maciej, 60-427 Poznan (PL); Gdyk, Lukasz, 62-070 Dabrowka (PL)
(74) Representative: Eupatent.pl

(57) **Abstract**

An intercom device having a housing comprising: a back member (101) for mounting the housing to a wall; a front member (103); a side member (102) positioned between the back member (101) and the front member (103) and having a form a ring rotatable with respect to the back member (101); a plurality of light sources (110-119) arranged along a circle (121) on the front member (103); and a controller (131) configured to change the illumination configuration of the light sources (110-119) in response to a change in position of the side member (102).

## Description

### TECHNICAL FIELD

The present disclosure relates to an intercom device.

### BACKGROUND

An intercom (also called an intercommunication device, a talkback or a doorphone) is a stand-alone audio or audiovisual communications system for use within a building or small collection of buildings or between a building and its surrounding infrastructure, such as a gate.

There is a need to improve existing intercom devices in order to increase their usability.

### SUMMARY

There is disclosed an intercom device having a housing comprising: a back member for mounting the housing to a wall; a front member; a side member positioned between the back member and the front member and having a form a ring rotatable with respect to the back member; a plurality of light sources arranged along a circle on the front member; and a controller configured to change the illumination configuration of the light sources in response to a change in position of the side member.

The side member can be further rotatable with respect to the front member.

The side member can be movable along its main axis.

The device may comprise elastic means between the back member and the ring member for providing a biasing force keeping the ring member in a bias position against external forces.

The controller can be configured to convert the rotation of the side member to an input code.

The device may further comprise an output port and wherein the controller is configured to power to the output port upon receiving a particular code via the side member.

The device may further comprise a data interface for communicating with external devices and wherein the controller is configured to initiate communication with an external device via the data interface upon receiving a particular code via the side member.

### BRIEF DESCRIPTION OF DRAWINGS

The intercom device is presented by means of exemplary embodiments on a drawing, in which:
Figs. 1-3 show a first embodiment of the intercom device in a front view, side view and slanted view, respectively;
Fig. 4 shows a functional schematic of the intercom device;
Figs. 5A-5F show various scenarios of light sources illumination;
Fig. 6 shows a second embodiment of the intercom device in a front view;
Fig. 7 shows an example of fixing the intercom device to a wall.

### DETAILED DESCRIPTION

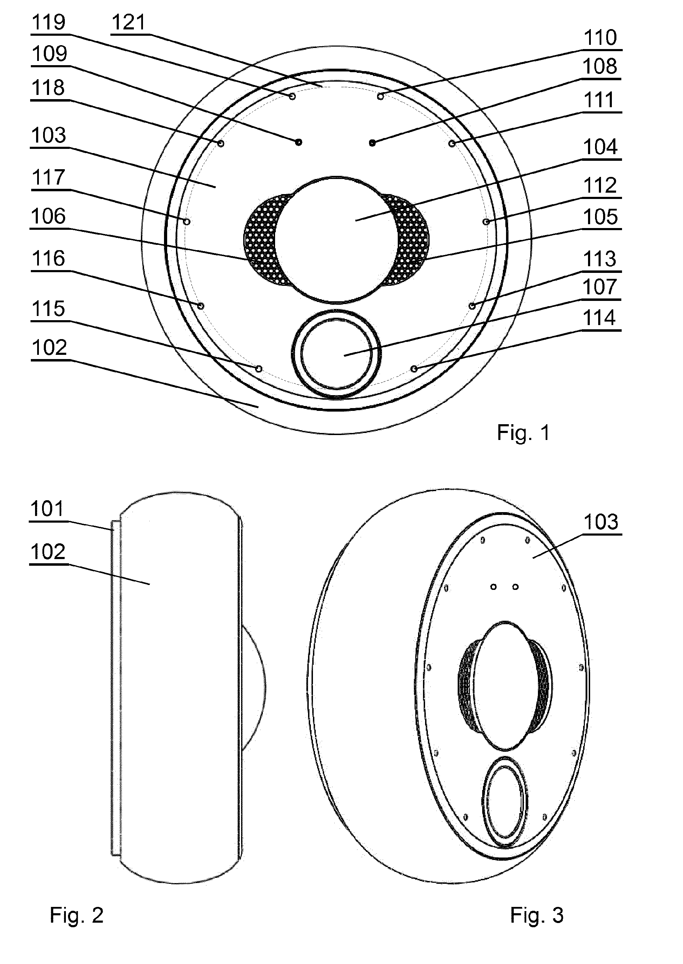

The intercom device may have a form as shown by means of a first example embodiment on Fig. 1-3. It has a substantially ring-shaped housing.

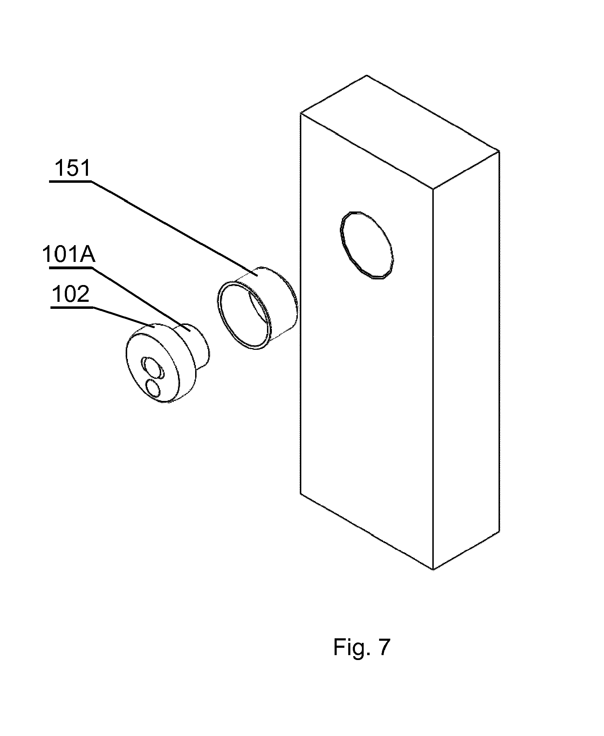

The housing has a back member 101 for mounting the device to a wall, such as a wall inside or outside a house. The back member 101 may have various openings (not shown) facilitating mounting by means of screws or other attachment means. Alternatively, the back member may be provided with a self-adhesive surface for adhering to the wall. In yet another embodiment, the back member may be larger than the member 102 shown in Fig. 2 and may have a form of an elongated cylinder 102A as shown in Fig. 7, to accommodate various circuitry for operating the intercom device. Such back member 102A may be fitted to a protective element 151 to be installed in an opening 150 in a wall at which the intercom device is to be installed, as shown in Fig. 7.

The housing further comprises a side member 102 in a form of a ring rotatable with respect to the back member 101. Moreover, the side member 102 may be movable along its main axis, in order to enable its movement towards and away from the wall. Elastic means (not shown), such as a spring, may be provided between the back member 101 and the ring member 102 to provide a biasing force keeping the ring member in a bias position against external forces (such as a force exerted by the user). Therefore, the ring member may be pushable towards the wall or pullable from the wall by the user, and once the user force is released, the side member 102 may return to its original position.

A front member 103 is provided at the front side of the housing. The front member 103 may be fixed still with respect to the back member 101 or may be rotatable with respect to the back member 101 along with the side member 102. In other words, the front member 103 may be fixed still with respect to the side member 102 or may be rotatable with respect to the side member 102.

A plurality of light sources 110-119, preferably light-emitting diodes (LEDs), are arranged along a circle 121 at the face of the front member 103. The diodes 110-119 may be single-color diodes (configurable to be on (lighting) or off (not-lighting)) or multi-color diodes (configurable to be in a plurality of on states (lighting by various colors) or off (not-lighting)). Moreover, the diodes 110-119 may be configured to be lighting with various intensity levels.

A camera 104, preferably with a fish-eye lens providing wide angle of view, can be installed preferably at the centre of the front member 103.

One or more loudspeakers 105, 106 can be installed, preferably at the sides of the camera 104.

One or more microphones 108, 109 can be installed at the front member 103. If a pair of directional microphones 108, 109 is used, it is possible to more accurately cancel background noise using known algorithms. Apart of it, using the pair of microphones it is possible to detect a position of the audio source (e.g. a user) in the space.

Moreover, a button 107, such as a push-button, a pull-button, a push-pull button, a rotatable knob or a push-type knob, a pull-type knob or a push-pull knob, can be installed at the front member 103.

The housing can be water-tight and resistant to high and low temperatures, in order to enable installation of the intercom device outdoors.

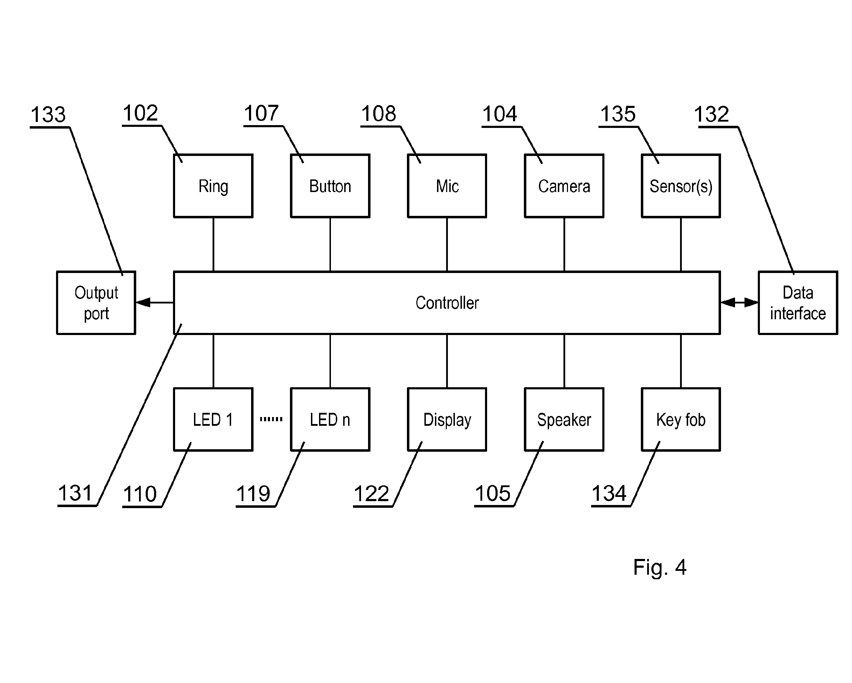

Fig. 4 shows a functional schematic of the device. The device is operated by a controller 131, which may be powered by a battery installed within the housing, a solar cell installed e.g. at the front member 103 (not shown) or an external power line (such as a standard wire power line or PoE - Power over Ethernet). The controller 131 may be a general purpose processor or a programmable controller operating software configured to provide the functionality as described below.

The controller 131 is configured to receive input from particular modules of the device, namely at least from the ring side member 102 (e.g. in form of a signal indicating the angle and direction of rotation and optionally whether the ring was pushed or pulled). The controller may also receive signal from the button 107 (e.g. in form of a signal indication whether the button was pushed or pulled), the microphone 108 (e.g. audio signal), or the camera 104 (e.g. video signal).

The controller may communicate, via a data interface 132, with other devices, such as other intercom devices of the same type or different types. For example, the intercom device as shown in Figs. 1-3 may be a slave device, suitable for being installed e.g. at a gate in front of the house to be operated by visitors, and a master intercom device may be installed in-house. The data interface 132 may be any known wired or wireless interface, such as e.g. Ethernet, WiFi, BlueTooth Low Energy (BLE), GSM 3G/LTE etc. For example, the data interface 132 may be used for transmitting audio, video or audio-video data between the intercom devices.

The audio, video or audio-video signals may be also stored at a local memory of the controller or at a removable data storage, such as a memory card. The data interface 132 may also transmit audio, video or audio-video data to a remote storage, such as a cloud storage. The stored audio, video or audio-video data can be made accessible (for live viewing, replaying, editing, deleting etc), via the data interface 132 or another dedicated interface, from a remote device such as another intercom device or another type of device, such as a smartphone. The stored content can be made accessible via a universal interface such as HTML browser.

The controller may be also configured to operate an output port 133, to which an external device may be connected. For example, the output port 133 may be used to control an electronic lock of a door or may be used to control a gate drive. The output port 133 may be activated, i.e. powered on to operate the device connected to it, in response to a signal transmitted to the controller 131 from another intercom device or another type of device (e.g. a smartphone) via the data interface 132 or in response to the commands entered by the user via the rotatable ring 102.

The device may further comprise a key fob module 134, i.e. a security hardware device with built-in authentication used to control and secure access to the controller. The key fob provides a randomly generated access code, which changes periodically, usually every 30 to 60 seconds. A user first authenticates themselves on the key fob with a personal identification number (PIN), followed by the current code provided on the device, e.g. via the light sources 110-119 or the display 122. The key fob could be communicated via a BLE application on a mobile device, such as a smartphone. In this manner, it could be possible to activate the output port 133, e.g. to open a gate, by simply bringing the mobile device with the BLE application in proximity to the intercom device.

The device may further comprise one or more sensors 135, such as temperature or humidity sensors, which can read the ambient environment parameters and communicate these parameters to other intercom devices via the data port 132, e.g. to display outdoor temperature and humidity at a home gateway device.

The rotatable ring 102 may be used to input commands to the controller 131. In response to rotation of the ring 102, the controller 131 changes the illumination pattern of the light sources 110-119. The following are example, non-exhaustive scenarios of operation of the device.

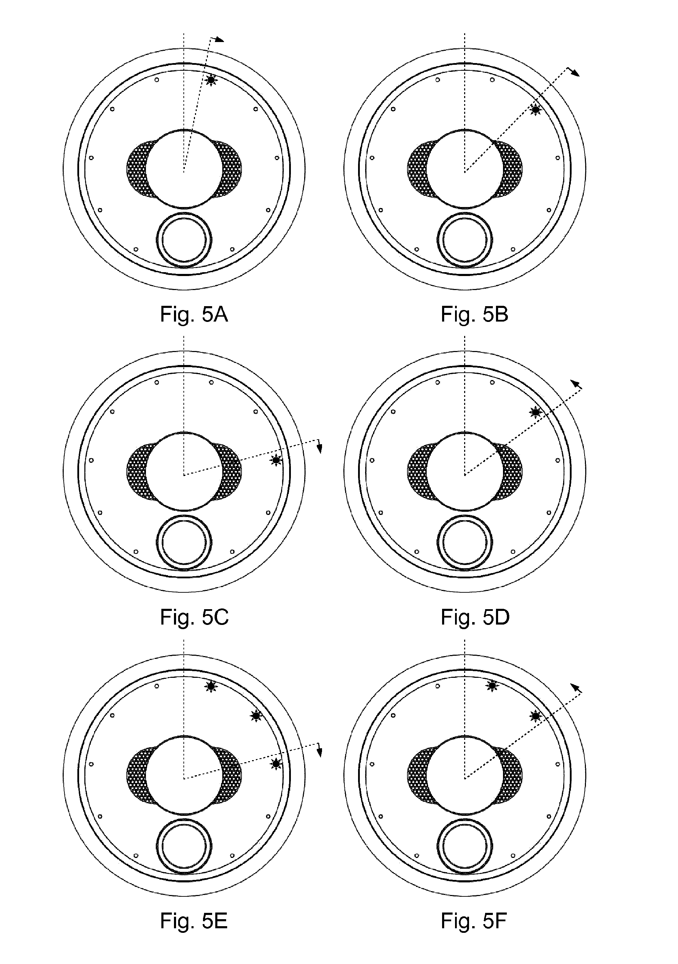

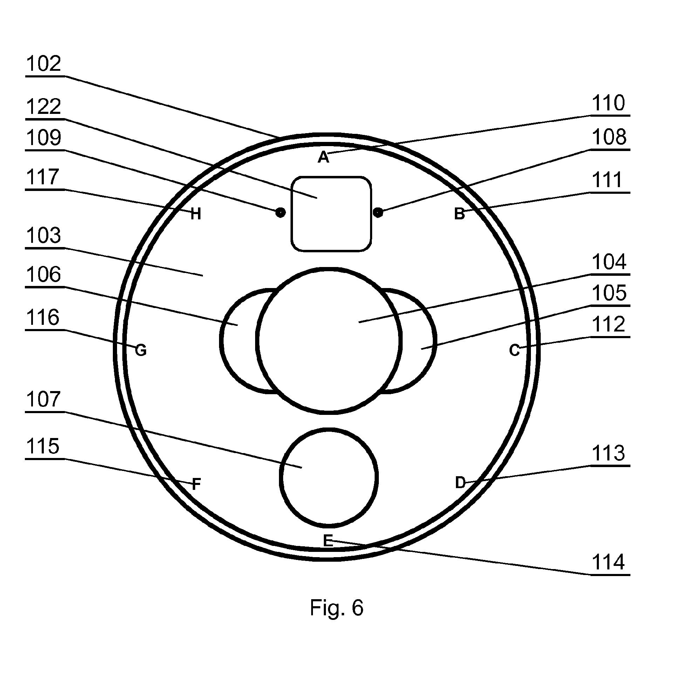

In one scenario, the light sources 110-119 are single-color light emitting diodes which can be either in an on state (illuminating) or off state (non-illuminating). The rotatable ring 102 may be used to enter codes in form of decimal numbers to the controller 131. At an idle state, all diodes are off. When the user begins to rotate the ring 102, the first diode 110 is turned on, as shown in Fig. 5A. After the ring is rotated clockwise by an angle of more than 36 degrees (360 degrees divided by 10 diodes), the first diode 110 is turned off and the second diode 111 is turned on, as shown in Fig. 5B. Rotation of the ring 102 by further 36 degrees causes turning off of the second diode 111 and turning on of the third diode 112, as shown in Fig. 5C. In turn, rotation of the ring 102 by 36 degrees to the left causes turning off of the third diode 112 and turning on of the second diode 111, as shown in Fig. 5D. In this way, the diode that is turned on represents the angle by which the ring 102 has been rotated. As there are 10 diodes, the user may simply enter a digit from 0 to 9 by rotating the ring 102 to illuminate the particular diode 110-119. The diodes 110-119 may have numbers written next to them. Alternatively, the light sources may have a form of illuminated numbers, letters or other signs, as shown in Fig. 6. In case more than one digit is to be entered, the currently entered digit can be confirmed e.g. by pushing the ring 102 towards the wall. This may cause turning off of all diodes and the user may select the next diode to be illuminated by turning the ring 102. When the ring 102 is turned, a "click" sound may be further emitted via the loudspeaker(s) 105, 106.

In yet another scenario, the diodes 110-119 are turned on when rotating the ring 102 clockwise, and turned off when rotating the ring 102 counter-clockwise, i.e. the number of diodes illuminated indicates the digit that has been entered. Fig. 5E and 5F show this scenario for situation corresponding to that shown in Fig. 5C and 5D.

In another scenario, the diodes 110-119 are multi-color diodes, which can be activated (illuminated) by rotating the ring in the manner as described above. Once the user presses the ring 102, the illumination of the diode may be changed to another color, e.g. when rotating the ring the diodes may be illuminated to green color, and after pressing the ring, the selected diode may change its color to blue and remain blue in order to indicate that this diode has been already selected.

In yet another scenario, in order to activate another diode, the ring may have to be rotated by an angle different than 360 degrees divided by the number of diodes. For example, regardless on the number of diodes, the next diode may be selected by rotating the ring e.g. by 5 degrees. In this manner, it may be not necessary to rotate the ring by 360 degrees to select all diodes sequentially.

In this manner, the user may enter various codes to the intercom device. For example, the controller 131 may be configured to accept 4-element codes in order to invoke an action, such as connection with another device via the data port 132 or activation of the output port 133 e.g. to open door. In order to indicate that a particular element of the code has been selected, the user may have to push the ring 102 towards the wall. For example, if a code 1423 is to be entered, the user has to illuminate diode 1, then push the ring, then illuminate diode 4, then push the ring, then illuminate diode 2, then push the ring, then illuminate diode 3 and finally push the ring. Once a correct code is entered, the controller 131 may signal it by e.g. illumination of all diodes and incorrect code entered may be signaled by flashing the diodes or by turning all diodes off.

Alternatively, to indicate that the element of the code has been entered, instead of pushing the ring 102, the user may have to pull the ring 102, to make a pause (e.g. 1 second pause), push or pull the button 107 or rotate the ring 102 in an opposite direction.

After receiving a particular code, the controller 131 may further invoke an additional action, such as:
- establishing connection via the data interface 132 with another intercom device (therefore, the intercom device may be operable to select a recipient depending on the code entered and may not allow communication with anyone until entering a correct code)
- delivering power to output port(s) to initiate operation of devices connected to the output port(s) 133 such as an electronic lock at a gate or a gate drive (therefore, the intercom device may be used to operate devices connected to the output port(s)).

The codes and corresponding actions to be performed by the controller 131 may be pre-programmed at the controller, e.g. by means of a master intercom device or another device (such as a smartphone) via the data interface 132.

The light sources 110-119 may be also used to indicate other parameters of the intercom device or an external device connected to it. For example, the light sources may represent audio volume level of the intercom device or an external device. Alternatively, the light sources 110-119 may display a welcome sign pattern (stationary or animated) when a proximity sensor detects a user in the vicinity of the device.

Fig. 6 shows a second embodiment of the intercom device in a front view. It differs from the first embodiment shown in Figs. 1-3 in that it has eight light sources 110-117 in form of letters A-H, which can be illuminated by e.g. light emitting diodes. Moreover, it has a display 122 which can display video data received via the data interface from another intercom device.

## Claims

1. An intercom device having a housing comprising:
- a back member (101) for mounting the housing to a wall;
- a front member (103);
- a side member (102) positioned between the back member (101) and the front member (103) and having a form a ring rotatable with respect to the back member (101);
- a plurality of light sources (110-119) arranged along a circle (121) on the front member (103); and
- a controller (131) configured to change the illumination configuration of the light sources (110-119) in response to a change in position of the side member (102).

2. The intercom device according to claim 1, wherein the side member (102) is further rotatable with respect to the front member (103).

3. The intercom device according to claim 1, wherein the side member (102) is movable along its main axis.

4. The intercom device according to claim 3, further comprising elastic means between the back member (101) and the ring member (102) for providing a biasing force keeping the ring member in a bias position against external forces.

5. The intercom device according to claim 1, wherein the controller (131) is configured to convert the rotation of the side member (102) to an input code.

6. The intercom device according to claim 5, further comprising an output port (133) and wherein the controller (131) is configured to power to the output port (133) upon receiving a particular code via the side member (102).

7. The intercom device according to claim 5, further comprising a data interface (132) for communicating with external devices and wherein the controller (131) is configured to initiate communication with an external device via the data interface (132) upon receiving a particular code via the side member (102).
